# EUROPÄISCHE PATENTANMELDUNG

(11) **EP 2 348 390 A1**
(43) Veröffentlichungstag der Anmeldung: **27.07.2011**
(21) Anmeldenummer: 10000548.7
(22) Anmeldetag: 20.01.2010
(51) Int. Cl.: G06F 3/042

(54) **Eingabevorrichtung mit einer Kamera**

(71) Anmelder: EVOLUCE AG, 85399 Halbergmoos (DE)
(72) Erfinder: Herfutner, Wolfgang, 85416 Langenbach/ Niederhummel (DE)
(74) Vertreter: Rothkopf, Ferdinand

(57) **Zusammenfassung**

Bei einer Eingabevorrichtung (10) mit einer Kamera (12), vor der ein Benutzer durch Einnehmen bestimmter Positionen Signale erzeugen kann, die von einer Auswerteeinrichtung (14) auswertbar sind, ist die Kamera (12) als eine entfernungssensitive Kamera (12) gestaltet und es ist eine Berührungsfläche (16) vorgesehen, welche derart vor der entfernungssensitiven Kamera (12) angeordnet ist, dass der Benutzer die Positionen an der von der entfernungssensitiven Kamera (12) abgewandten Seite der Berührungsfläche (16) einzunehmen hat.

## Beschreibung

### Hintergrund der Erfindung

Die Erfindung betrifft eine Eingabevorrichtung mit einer Kamera, vor der ein Benutzer durch Einnehmen bestimmter Positionen Signale erzeugen kann, die von einer Auswerteeinrichtung auswertbar sind. Ferner betrifft die Erfindung ein Verfahren zum Erkennen eines Objekts an einer Bildschirmebene.

Eingabevorrichtungen der oben genannten Art werden insbesondere verwendet, um Positionen und/oder Gesten zu erkennen und diese in Befehle umzuwandeln. Dabei ist es nicht zwingend erforderlich, dass der Benutzer ein Eingabemittel direkt berührt, es reicht bereits aus, wenn dieser mit zum Beispiel einem Finger eine vordefinierte Bewegung vollzieht. Mit den Befehlen kann eine zugehörige rechnergesteuerte Anlage zu vorbestimmten Funktionen veranlasst werden. So können mittels dieser Eingabevorrichtung beispielsweise Spiele bedient oder Bilder und Videos bearbeitet und auch sonstige Funktionen ausgelöst werden, während man bisher im Wesentlichen nur eine Bedienung von rechnergesteuerten Anlagen mittels einzelner Berührpunkte, Tastatur oder Maus kennt.

Die bisher verwendeten Techniken zum Erkennen bestimmter Positionen von Gegenständen sind vielfältig. Meist wird mit optischen Sensoren gearbeitet, die die Berührungspunkte bzw. Positionen erkennen und in Signale umwandeln können. Bei einer aus JP 2004326188 A für Projektionsbildschirme bekannten Technik wird der Umstand genutzt, dass der Finger oder der sonstige Gegenstand Licht reflektiert und auf Infrarot-Sensoren zurückwirft. Diese Infrarot-Sensoren werten die Lichtinformationen aus und wandeln sie in Befehle bzw. Informationen um.

Die Problematik der oben genannten Eingabevorrichtungen liegt grundsätzlich darin, dass Kameras an exponierten Positionen angeordnet sein müssen, von denen sie direkten Kontakt zu dem zu detektierenden Gegenstand haben. Bewegungsabläufe bzw. sich ändernde Positionen der Gegenstände werden häufig nur mit unzureichender Genauigkeit erkannt.

### Zugrunde liegende Aufgabe

Der Erfindung liegt die Aufgabe zugrunde, eine Eingabevorrichtung mit einer Kamera zu schaffen, bei der eine sichere Erkennung von insbesondere sich bewegenden Objekten gewährleistet ist. Ferner ist es Aufgabe der Erfindung, eine Eingabevorrichtung zur Verfügung zu stellen, die ermöglicht, die Kamera an weniger exponierten Anbringungsorten vorzusehen.

### Erfindungsgemäße Lösung

Erfindungsgemäß ist eine Eingabevorrichtung mit einer Kamera geschaffen, vor der ein Benutzer durch Einnehmen bestimmter Positionen Signale erzeugen kann, die von einer Auswerteeinrichtung auswertbar sind, und bei der die Kamera als eine entfernungssensitive Kamera gestaltet ist, und bei der eine Berührungsfläche vorgesehen ist, welche derart vor der entfernungssensitiven Kamera angeordnet ist, dass der Benutzer die Positionen an der von der entfernungssensitiven Kamera abgewandten Seite der Berührungsfläche einzunehmen hat.

Erfindungsgemäß umfasst die Eingabevorrichtung mindestens eine entfernungssensitive Kamera, d.h. die Kamera bzw. deren Sensor ist in der Lage, Abstände zwischen der Kamera und einem Objekt zu ermitteln.

Die erfindungsgemäße Eingabevorrichtung umfasst ferner eine Berührungsfläche, vor der ein Benutzer durch Einnehmen bestimmter Positionen Signale erzeugen kann. Zum einen kann der Benutzer dazu die Berührungsfläche mittels eines Objekts bzw. eines Eingabemediums, wie etwa mittels eines Stiftes, wie ein IR-LED-Stift, eines Fingers, einer Hand oder eines anderen Mediums, direkt berühren. Zum anderen ist es auch ausreichend, wenn der Benutzer sich mit einem Objekt der Berührungsfläche nähert. Es können insbesondere Objekte und Bewegungen dieser Objekte erkannt werden, die zu der Berührungsfläche einen Abstand zwischen 10 m und 500 nm, insbesondere von zwischen 2 m und 500 nm aufweisen.

Die entfernungssensitive Kamera ist erfindungsgemäß auf der dem Benutzer abgewandten Seite der Berührungsfläche angeordnet, so dass die entfernungssensitive Kamera selbst oder eine zugehörige Beleuchtungseinrichtung Lichtpulse durch die Berührungsfläche zu der zu detektierenden Position des Objekts bzw. Eingabemediums sendet. Am Objekt werden die Lichtpulse reflektiert und zur entfernungssensitive Kamera zurückgeworfen. Anhand der erfassten Zeit und/oder anhand der Lagererkennung und Lageänderung des Objekts wird der Abstand zwischen Objekt und der entfernungssensitiven Kamera ermittelt und es werden entsprechende Signale erzeugt. Die erzeugten Signale werden an eine rechnergesteuerte Auswerteeinrichtung geleitet und ausgewertet.

Es ist auch denkbar, dass mehrere entfernungssensitive Kameras auf der dem Benutzer abgewandten Seite der Berührungsfläche angeordnet sind. In einem solchen Fall wird die Einbautiefe der Eingabevorrichtung reduziert.

Ein Vorteil dieser erfindungsgemäßen Anordnung liegt darin, dass die entfernungssensitive Kamera gegenüberliegend von dem Benutzer, nämlich auf der der Berührungsfläche abgewandten Seite angeordnet ist. Dadurch wird ermöglicht, dass die exakte Position eines Objekts relativ zur (vordefiniert angeordneten) Berührungsfläche und damit mit höherer Genauigkeit bestimmt werden kann. Da die entfernungssensitive Kamera insbesondere nicht - wie im Stand der Technik - an einer exponierten Position angeordnet ist, nämlich seitlich, ober- oder unterhalb der Berührungsfläche, sondern nicht sichtbar hinter der Berührungsfläche, wird ein Benutzer der erfindungsgemäßen Eingabevorrichtung während der Benutzung nicht mehr durch die entfernungssensitive Kamera abgelenkt und kann unbeschwerter arbeiten. Die Erkennung ist aufgrund einer besseren Winkelstellung der entfernungssensitiven Kamera verbessert. Darüber hinaus ist durch die Berührungsfläche vor der entfernungssensitive Kamera dem Benutzer klar definiert, in welchem Bereich - nämlich vor und/oder etwas neben der Berührungsfläche - er seine Gesten ausführen soll bzw. kann. Es kann dabei auch nicht so leicht zu einer unbemerkten Blockade durch weitere Elemente zwischen der Kamera und dem Bediener kommen. Ein weiterer Vorteil liegt darin, dass die Berührungsfläche selbst gar nicht zwingend berührt zu werden braucht, so dass an dieser in einem solchen Fall z.B. nicht Krankheitserreger übertragen werden können. Ferner ist eine Bedienung in ergonomisch vorteilhafter Körperposition möglich.

Die Auswerteeinrichtung, die der erfindungsgemäßen Eingabevorrichtung zugeordnet ist, ist insbesondere dazu eingerichtet, einem erkannten Objekt eine eindeutige Kennung und/oder eine Richtung zuzuordnen. Anhand der Kennung und/oder der Richtung können entsprechende Signale an eine zugehörige rechnergesteuerte Anlage weitergegeben werden.

Insbesondere kann die Auswerteeinrichtung dazu eingerichtet sein, die Lage eines erkannten Objekts in mindestens eine auf die Bildschirmebene bezogene oder relativ zu dieser definierte Koordinate umzurechnen. Die dadurch ermittelten Koordinaten können als Grundlage für eine Signalerzeugung dienen. Die Veränderung des Abstands des Objekts von der Berührungsfläche - nicht nur dessen zweidimensionale Lage allein - kann als Signal verstanden werden.

Ferner können mehrere zeitgleich erkannte Objekte zu einem Paket zusammengefasst werden und an eine das Paket weiter verarbeitende Einrichtung bereitgestellt werden.

Besonders bevorzugt ist die entfernungssensitive Kamera eine so genannte Time-of-flight- (TOF-) Kamera, die mindestens einen Time-of-Flight-Sensor umfasst. Ein solcher Sensor erfasst die Zeit, die ein von der Kamera ausgesandter Lichtpuls, wie beispielsweise Infrarot- (IR-) Licht, benötigt, um zu einem Objekt gesendet, dort reflektiert und wieder zurück zur Kamera gestrahlt zu werden. Die erfasste Zeit ist proportional zur Entfernung des Objekts zur Kamera.

Ferner kann die entfernungssensitive Kamera mit einer Infrarot-Kamera mit einer zugehörigen Infrarotlicht-Beleuchtung gestaltet sein, bei der Licht aus der Richtung der Kamera oder einer vordefinierten Fläche, insbesondere einer punktförmigen Quelle, gesendet wird. Durch eine entsprechend angepasste Auswertetechnik können Abstände von Objekten dann vor der Berührungsebene aufgrund deren Größenänderung und/oder Lageänderung erkannt werden. Dies ist selbst in einem Abstand von einigen Metern vor der Bildschirmebene möglich. Ferner können einzelne Objekte aufgrund ihrer Gesamtform - so beispielsweise gespreizte Finger einer Hand - als eine Signal erkannt werden.

Gemäß einer ersten vorteilhaften Weiterbildung der erfindungsgemäßen Eingabevorrichtung ist die Berührungsfläche als eine Bildschirmebene gestaltet, und es ist eine Anzeigeeinrichtung zum Erzeugen einer bildhaften Darstellung an der Bildschirmebene vorgesehen.

Eine derartige Bildschirmebene kann insbesondere als eine Multitouch-Bildschirmebene ausgebildet sein, die auch als Touchscreen-Ebene bezeichnet wird. An der Bildschirmebene kann ein Benutzer durch Berühren oder durch Gesten vor dem Bildschirm Blobs bzw. Berührungs- oder Signalbereiche erzeugen, die von einer Auswerteeinrichtung erkannt und ausgewertet werden. Zum Erzeugen einer bildhaften Darstellung sind beispielsweise Kennzeichnungen als Schwarz-Weiß-Muster denkbar.

Unter einer Anzeigevorrichtung ist eine Ausgabevorrichtung, wie ein Projektor, bzw. Mittel zum Anzeigen der die Signale auslösenden Objekte zu verstehen. Mittels der Anzeigevorrichtung können Kennzeichnungen, Signale, Bilder oder Bildabfolgen visualisiert werden. Das heißt, es werden bildhafte Darstellungen der durch die eingenommenen Positionen des Benutzers erzeugten Signale hervorgerufen.

Die Bildschirmebene kann in derselben oder in einer anderen Ebene angeordnet sein wie die Anzeigeeinrichtung zum Erzeugen einer bildhaften Darstellung. Insbesondere können die Bildschirmebene und die Anzeigeeinrichtung senkrecht zueinander angeordnet sein, um eine ergonomisch günstige Haltung bzw. Positionierung des Benutzers gewährleisten zu können.

Gemäß einer zweiten vorteilhaften Weiterbildung der erfindungsgemäßen Eingabevorrichtung ist die Bildschirmebene als ein Flüssigkristall-Bildschirm gestaltet.

Mittels dieser Weiterbildung kann ein Benutzer durch Berühren des Flüssigkristall-Bildschirms Signale erzeugen, die von einer rechnergesteuerten Auswerteeinrichtung erkannt und ausgewertet werden. Ferner können auf dem Flüssigkristall-Bildschirm auch jegliche bildhafte Darstellungen mit einer hohen Auflösung visualisiert werden.

Gemäß einer dritten Weiterbildung oder weiteren erfindungsgemäßen Lösung ist die Eingabevorrichtung mit einer Flüssigkristall-Bildschirmebene, an der ein Benutzer durch Berühren der Flüssigkristall-Bildschirmebene als Signale Blobs erzeugen kann, die von einer Auswerteeinrichtung auswertbar sind, gestaltet, und die Flüssigkristall-Bildschirmebene ist an ihrer dem Benutzer zugewandten Seite mit einer Haptikschicht gestaltet, die aus einer äußeren Folienschicht und einer vom Benutzer aus betrachtet dahinter ausgebildeten elastischen Schicht gebildet ist.

Bei einer derartigen Weiterbildung ist eine Haptikschicht aus einer äußeren, dem Benutzer zugewandten Folienschicht - eine so genannte Oberflächenschicht - und einer vom Betrachter aus gesehen dahinter angeordneten elastischen Schicht gestaltet.

Ein Vorteil dieser Weiterbildung liegt darin, dass der Benutzer bei Bedienung bzw. Berührung der Flüssigkristall-Bildschirmebene mit einem Objekt ein Stück weit in die Haptikschicht einsinkt. Hierbei wird eine bessere bzw. sichere Erkennung des Objekts bzw. des mit dem Objekt ausgelösten Blobs ermöglicht.

Die Folienschicht ist als Oberflächenschicht anti-reflektiv, leicht matt und mit einer Kratzfestigkeit von 3H Bleistifthärte ausgebildet. Die Transparenz der Folienschicht beträgt 99 %. Durch die leicht matte Ausgestaltung wird die Auflösung der Bildschirmebene im Wesentlichen nicht reduziert. Des Weiteren vermittelt die Oberfläche der Haptikschicht einen guten haptischen Eindruck bei dem Benutzer, insbesondere bei bewegten Gesten auf der Haptikschicht. Ferner ist die Folienschicht leicht reinigbar.

Die Folienschicht kann aus einer dem Benutzer zugewandten Schutzschicht, einer vom Benutzer aus betrachtet dahinter angeordneten Polyethylenschicht und einer weiter dahinter angeordneten Silikonklebeschicht aufgebaut sein. Die Silikonklebeschicht dient in einem solchen Fall zum Fixieren der hinter der Folienschicht ausgebildeten elastischen Schicht.

Gemäß einer vierten vorteilhaften Weiterbildung der erfindungsgemäßen Eingabevorrichtung ist die elastische Schicht eine Klebeschicht mit einer Dicke von 0,2 bis 2 mm, insbesondere von 0,5 bis 1,5 mm, bevorzugt von 1 mm.

Eine solche Klebeschicht ist bevorzugt dauerelastisch und vorzugsweise aus einem hochtransparenten Acrylat-Klebstoff mit einer Dichte von etwa 960 g/m³ gebildet. Alternativ kann an Stelle des Acrylat-Klebstoffs auch elastisches transparentes Material verwendet werden, das mittels eines dünnen viskoelastischen doppelseitigen Klebematerials auf Acrylbasis oder mittels eines Flüssigklebers mit der äußeren Folienschicht spannungsfrei verklebt wird.

Das doppelseitige Klebematerial weist eine gute Anpassungsfähigkeit an die zu klebende Oberfläche auf und zeichnet sich durch eine gute Schlagfestigkeit - auch bei Minustemperaturen - sowie durch eine gute Weichmacherbeständigkeit aus. Die Transparenz des Klebematerials ist sehr hoch; eine Vergilbung unter UV-Einfluss findet im Wesentlichen nicht statt. Ferner weist das Klebematerial eine gute Chemikalien-, Alterungs- und Witterungsbeständigkeit auf. Das Klebematerial ist vibrationsdämpfend und aufgrund einer geschlossenzelligen Struktur dicht.

Die Klebeschicht ist vorteilhafterweise weich ausgestaltet, so dass Objekte bzw. Eingabemedien bei leichtester Berührung bereits in die Haptikschicht einsinken und eine IR-Licht-Streuung verursachen. Hierdurch kann bei Verwendung einer Filter-Software eine bessere Erkennung von Blobs aufgrund höherer Kontraste gewährleistet werden.

Gemäß einer fünften vorteilhaften Weiterbildung der erfindungsgemäßen Eingabevorrichtung ist vom Benutzer aus betrachtet hinter der elastischen Schicht eine Acrylplatte oder eine Glasplatte ausgebildet.

Diese Acryl- oder Glasplatte ist vorzugsweise über die Klebeschicht mit der Haptikschicht vollflächig verbunden.

Die Acryl- oder Glasplatte weist vorzugsweise eine Dicke von 4 bis 12 mm, insbesondere von 6 bis 8 mm, auf. An seitlichen Rändern der Acryl- bzw. Glasplatte wird IR-Licht mittels seitlich angeordneter IR-Lichtquellen eingestrahlt. Das eingestrahlte Licht verteilt sich über die seitlichen Ränder gleichmäßig infolge totaler interner Reflexion. Bei Berührung der Haptikschicht wird dieses IR-Licht gestreut und von der entfernungssensitiven Kamera erkannt.

Besonders vorteilhaft senden die IR-Lichtquellen eine gepulste IR-Strahlung aus. Die Pulsung erfolgt bevorzugt mit einer Frequenz von 40 Hz bis 60 Hz. Die zugehörigen entfernungssensitiven Kameras können mit gleicher Pulsung Bilder aufnehmen. Dadurch entstehen während der Aufnahme Beleuchtungsspitzen, die eine besonders gute Blob-Erkennung zur Folge haben. Ferner kann während den Pausen der künstlichen Beleuchtung mit den entfernungssensitiven Kameras ermittelt werden, wie groß der Anteil an Infrarotlicht in der natürlichen Beleuchtung ist. Der Vorteil ist eine bessere Tageslichttauglichkeit der erfindungsgemäßen Eingabevorrichtung bzw. eine bessere Unempfindlichkeit gegenüber IR-Licht aus der Umgebung. Ferner kann der Stromverbrauch der Eingabevorrichtung auf diese Art verringert werden.

Weiterhin kann mittels Einbettung von farblosen, lichtstreuenden Partikeln in eine Acrylplatte die Ausbreitungsrichtung der in die Platte eintretenden IR-Lichtstrahlen durch Lichtbrechung und Lichtbeugung derart geändert werden, dass die Totalreflexion des IR-Lichts an den Rändern reduziert wird. Ein Teil des IR-Lichts tritt aus der Acrylplatte mit gleichmäßiger Streuung über die Oberfläche in Richtung der Haptikschicht aus. Objekte, die sich vor der Bildschirmebene befinden und die Haptikschicht nicht berühren, reflektieren dieses IR-Licht. Das reflektierte IR-Licht wird von der entfernungssensitiven Kamera erkannt und das Objekt detektiert.

Gemäß einer sechsten vorteilhaften Weiterbildung der erfindungsgemäßen Eingabevorrichtung ist die Flüssigkristall-Bildschirmebene als ein LCD-Panel oder ein OLED-Panel gestaltet.

Der Flüssigkristall-Bildschirm kann beispielsweise als OLED-Panel (organic light emitting diode, OLED) oder als LCD-Panel (liquid crystal display, LCD) mit einer Vielzahl Pixel bzw. Bildpunkten in herkömmlicher Weise zum Beispiel nach der TN-Technik (nematische Drehzelle, twisted nematic, TN-Zelle), der STN-Technik (super-twisted-hematic), der DSTN-Technik (double-super-twist-nematic), der TSTN-Technik (triple-supertwisted-nematic, so genannte VGA-Bildschirme), der PVA-Technik (patterned-vertical-alignment), der MVA-Technik (multi-domainvertical-alignment) oder auch der IPS-Technik (in-plane-switching) gestaltet sein. Derartige Flüssigkristall-Bildschirme sind für Infrarotlicht weitestgehend durchlässig.

Gemäß einer siebten vorteilhaften Weiterbildung der erfindungsgemäßen Eingabevorrichtung ist vom Benutzer aus betrachtet hinter der Flüssigkristall-Bildschirmebene ein erster Diffusor angeordnet.

Bei einer derartigen Weiterbildung ist der erste Diffusor direkt hinter der Flüssigkristall-Bildschirmebene angeordnet. Dieser Diffusor gewährleistet eine leichte Streuung des IR-Lichts, die für eine Erkennung der zu detektierenden Objekte hinreichend ist. Ferner ist dieser Diffusor für einen homogenen Bildeinruck im Hinblick auf die Streuung von sichtbarem Beleuchtungslicht hilfreich.

Gemäß einer achten vorteilhaften Weiterbildung der erfindungsgemäßen Eingabevorrichtung ist vom Benutzer aus betrachtet hinter dem ersten Diffusor eine transparente Platte angeordnet.

Diese transparente Platte ist vorzugsweise eine Glas- oder Acrylplatte, die den ersten Diffusor gegen die Flüssigkristall-Bildschirmebene drückt und abstützt. Die transparente Platte verhindert insbesondere ein Durchbiegen oder einen etwaigen Bruch der Flüssigkristall-Bildschirmebene, wenn diese horizontal oder schräg installiert ist.

Gemäß einer neunten vorteilhaften Weiterbildung der erfindungsgemäßen Eingabevorrichtung ist vom Benutzer aus betrachtet hinter der transparenten Platte mindestens eine Beleuchtungsvorrichtung angeordnet.

Durch eine derartige Beleuchtungsvorrichtung wird die Bildschirmebene zur Darstellung von Pixel bzw. Bildpunkten von hinten mit sichtbarem Licht beleuchtet. Die mindestens eine Beleuchtungsvorrichtung ist vorzugsweise eine LED- (Light-Emitting-Diode) oder eine CCFL- (Cold Cathode Fluorescent Lamp) Vorrichtung. Die Beleuchtungsvorrichtung weist mindestens eine Durchgangsöffnung auf, durch die die mindestens eine entfernungssensitive Kamera IR-Licht strahlen kann. Alternativ kann die Beleuchtungsvorrichtung als eine um die Bildschirmebene umlaufende Beleuchtung gestaltet sein, bei der insbesondere einzelne Beleuchtungspunkte in Form von "LED-Edge-Lights" angeordnet sind. Die zugehörige transparente Platte ist vorteilhaft aus Acryl gestaltet. Eine hinter der transparenten Platte angeordnete Beleuchtungsvorrichtung entfällt dann.

Gemäß einer zehnten vorteilhaften Weiterbildung der erfindungsgemäßen Eingabevorrichtung ist zwischen der transparenten Platte und der mindestens einen Beleuchtungsvorrichtung ein zweiter Diffusor mit mindestens einer Durchgangsöffnung angeordnet.

Der zweite Diffusor gewährleistet relativ starke und gleichmäßige Streuung von sichtbarem Licht, das von der Beleuchtungsvorrichtung ausgesendet wird. Der zweite Diffusor weist, wie die Beleuchtungsvorrichtung, mindestens eine Durchgangsöffnung zur Durchleitung von IR-Licht der mindestens einen entfernungssensitiven Kamera auf.

Gemäß einer elften vorteilhaften Weiterbildung der erfindungsgemäßen Eingabevorrichtung ist zwischen dem zweiten Diffusor und der mindestens einen Beleuchtungsvorrichtung mindestens eine Aufhellfolie angeordnet.

Mittels dieser Weiterbildung wird die Lichtstärke der mindestens einen Beleuchtungsvorrichtung intensiviert und auf die Bildschirmebene gerichtet.

Gemäß einer zwölften vorteilhaften Weiterbildung der erfindungsgemäßen Eingabevorrichtung ist vor der entfernungssensitiven Kamera ein IR-Sperrfilter mit einem Wellenbereich von 850 nm bis 940 nm angeordnet.

Der IR-Sperrfilter bzw. Infrarotlichtfilter lässt bevorzugt nur Licht der Wellenlänge von 850 bis 890 nm, insbesondere von 880 nm +/- 10 nm, durch. Sonnenlicht weist im Bereich von 850 nm und 940 nm einen besonders geringen Infrarotlichtanteil auf. Auf diese Weise kann der Einfluss des Infrarotlichtanteils im Tageslicht und auch im Kunstlicht minimiert werden. Der Bereich von 850 nm ist vorliegend besonders bevorzugt, da bekannte Kameras bei dieser Wellenlänge eine höhere Sensibilität aufweisen als bei 940 nm. Der IR-Sperrfilter ist vorzugsweise an einem Objektiv der entfernungssensitiven Kamera angeordnet.

Gemäß einer dreizehnten vorteilhaften Weiterbildung der erfindungsgemäßen Eingabevorrichtung weist die Bildschirmebene mindestens einen Rand auf, an dem mindestens ein Spiegel angeordnet ist, der im Wesentlichen senkrecht zur Bildschirmebene ausgerichtet ist, und der sich vom Benutzer aus betrachtet hinter der Bildschirmebene von dieser bis mindestens zum zweiten Diffusor erstreckt.

Bei einer derartigen Weiterbildung ist an Seitenwänden bzw. am Rand der Bildschirmebene mindestens ein Spiegel angeordnet, der sich von der Bildschirmebene bis zum zweiten Diffusor erstreckt. Hierdurch wird von dem mindestens einen Spiegel an den Seitenwänden das Licht vom zweiten Diffusor nach innen in die Eingabevorrichtung hinein und zur Bildschirmebene hin reflektiert. Der mindestens eine Spiegel bewirkt einen randnahen Helligkeitsausgleich für den relativ transparenten ersten Diffusor.

Gemäß einer vierzehnten vorteilhaften Weiterbildung der erfindungsgemäßen Eingabevorrichtung ist der mindestens eine Spiegel zu der Bildschirmebene in einem Winkel von 90,5° bis 95° ausgerichtet.

Der mindestens eine, im Wesentlichen senkrecht zur Bildschirmebene ausgerichtete Spiegel bildet in dieser Weiterbildung mit der Bildschirmebene vom Benutzer aus betrachtet einen Winkel von 90,5° bis 95°. Dadurch, dass der mindestens eine Spiegel bezogen auf den zweiten Diffusor leicht nach innen in die Eingabevorrichtung hinein gekippt ist, wird das eingestrahlte Licht derart reflektiert, dass der Rand der Bildschirmebene besonders gleichmäßig ausgeleuchtet ist und sich dort am Rand keine Spiegelungen zeigen.

Ferner ist die Aufgabe gemäß der Erfindung durch ein Verfahren zum Erkennen eines Objekts an einer Bildschirmebene gelöst. Das Verfahren umfasst folgende Schritte:
- Eindrücken des Objekts in die Bildschirmebene,
- Zuordnen eines Blobs zum Objekt aufgrund eines durch das Eindrücken erzeugten Signals,
- Beibehalten der Zuordnung des Blobs zum Objekt während einer Bewegung des Objekts an der Bildschirmebene, ohne dass dieses dabei eingedrückt wird.

Bei dem Verfahren zum Erkennen eines Objekts wird das Objekt zunächst in eine Bildschirmebene eingedrückt und hierdurch ein Signal erzeugt. Unter einem Objekt ist beispielsweise ein Eingabemedium zu verstehen, wie etwa ein Stift, beispielsweise ein IR-LED-Stift, ein Finger oder auch ein anderes geeignetes Medium. Diesem Objekt wird nach dem Eindrücken aufgrund des erzeugten Signals ein Blob, das heißt Koordinaten bezogen auf die Bildschirmebene als eindeutige Kennung, zugeordnet. Anhand der Koordinaten können entsprechende Signale an eine rechnergesteuerte Auswerteeinrichtung weitergegeben werden.

Wird das in die Bildschirmebene eingedrückte und erkannte Objekt nun aus der Bildschirmebene wieder herausgehoben und mit oder ohne Kontakt zur Bildschirmebene relativ zu den zuvor zugeordneten Koordinaten bewegt bzw. verschoben, so wird die Zuordnung der Koordinaten bzw. des Blobs zum Objekt beibehalten. Das sich auf der Bildschirmebene bewegende Objekt wird also "verfolgt", obwohl es während dessen Bewegung nicht eingedrückt werden muss. Hierdurch wird eine besonders einfache Handhabung bzw. Bedienung der Bildschirmebene ermöglicht.

Gemäß einer ersten vorteilhaften Weiterbildung des erfindungsgemäßen Verfahrens zum Erkennen eines Objekts umfasst das Verfahren ferner folgende Schritte:
- Erneutes Eindrücken des Objekts in die Bildschirmebene,
- Aufgeben der Zuordnung des Blobs zum Objekt durch das erneute Eindrücken des Objekts.

Ein Aufgeben einer Zuordnung von Koordinaten bzw. eines Blobs zu einem Objekt erfolgt mit dieser Weiterbildung durch ein erneutes Eindrücken des Objekts in die Bildschirmebene. Es wird ein entsprechendes Signal erzeugt, das an die rechnergesteuerte Auswerteeinrichtung geleitet wird. Die Auswerteeinrichtung kann die Signale in entsprechende Befehle bzw. Informationen umwandeln. Ein erneuter Erkennungsvorgang des Objekts kann danach durch ein erneutes Eindrücken des Objekts in die Bildschirmebene ausgelöst werden.

Des Weiteren ist die Aufgabe gemäß der Erfindung durch eine Tischvorrichtung mit einer Tischfläche und mindestens einer erfindungsgemäßen Eingabevorrichtung gelöst, bei der die Eingabevorrichtung senkrecht zur Tischfläche ausgerichtet ist oder in der Tischfläche selbst integriert ist.

Erfindungsgemäß ist eine Tischvorrichtung geschaffen, die eine Eingabevorrichtung gemäß den oben erläuterten Merkmalen umfasst. Die Eingabevorrichtung umfasst eine Berührungsfläche, beispielsweise eine Multitouch-Bildschirmebene, die wahlweise senkrecht zu einer Tischfläche der Tischvorrichtung ausgerichtet ist oder in dieser Tischfläche integriert, also in derselben Ebene wie die Tischfläche ausgebildet ist. Mindestens eine entfernungssensitive Kamera, die von einem Benutzer durch Objekte ausgelöste Signale oder Gesten erkennt, ist hinter der Berührungsfläche angeordnet. Die mindestens eine entfernungssensitive Kamera ist somit während der Benutzung der Eingabevorrichtung grundsätzlich nicht sichtbar, so dass der Benutzer von der entfernungssensitiven Kamera nicht abgelenkt wird. Ferner erkennt die entfernungssensitive Kamera die Positionen der die Signale bzw. Gesten auslösenden Objekte mit hoher Genauigkeit.

Gemäß einer ersten vorteilhaften Weiterbildung der erfindungsgemäßen Tischvorrichtung ist eine Anzeigevorrichtung senkrecht zur Tischfläche ausgerichtet.

Bei einer derartigen Weiterbildung ist die Berührungsfläche vorzugsweise in der Tischfläche integriert. Eine Anzeigevorrichtung, wie beispielsweise eine Ausgabevorrichtung, wie ein Projektor, bzw. ein Mittel zum Anzeigen der die Signale auslösenden Objekte, wie ein LCD-Bildschirm, ist senkrecht zu der Tischfläche angeordnet. Mittels der Anzeigevorrichtung können Kennzeichnungen, Signale, Bilder oder Bildabfolgen visualisiert werden. Ferner können die die Signale erzeugenden Objekte mittels der Anzeigevorrichtung visualisiert werden, das heißt, es werden bildhafte Darstellungen der Positionen der Objekte wiedergegeben.

Der Benutzer nimmt bei einer derartigen erfindungsgemäßen Anordnung der Tischvorrichtung eine ergonomisch günstige Haltung ein; ein Bedienen der Eingabevorrichtung wird erleichtert.

### Kurzbeschreibung der Zeichnungen

Nachfolgend werden zwei Ausführungsbeispiele der erfindungsgemäßen Lösung anhand der beigefügten schematischen Zeichnungen näher erläutert. Es zeigen:
- Fig. 1:: eine schematische Darstellung eines ersten Ausführungsbeispiels einer erfindungsgemäßen Eingabevorrichtung,
- Fig. 2:: eine schematische Darstellung eines zweiten Ausführungsbeispiels einer erfindungsgemäßen Eingabevorrichtung und
- Fig. 3: eine perspektivische Darstellung einer Tischvorrichtung mit einer erfindungsgemäßen Eingabevorrichtung.

### Detaillierte Beschreibung der Ausführungsbeispiele

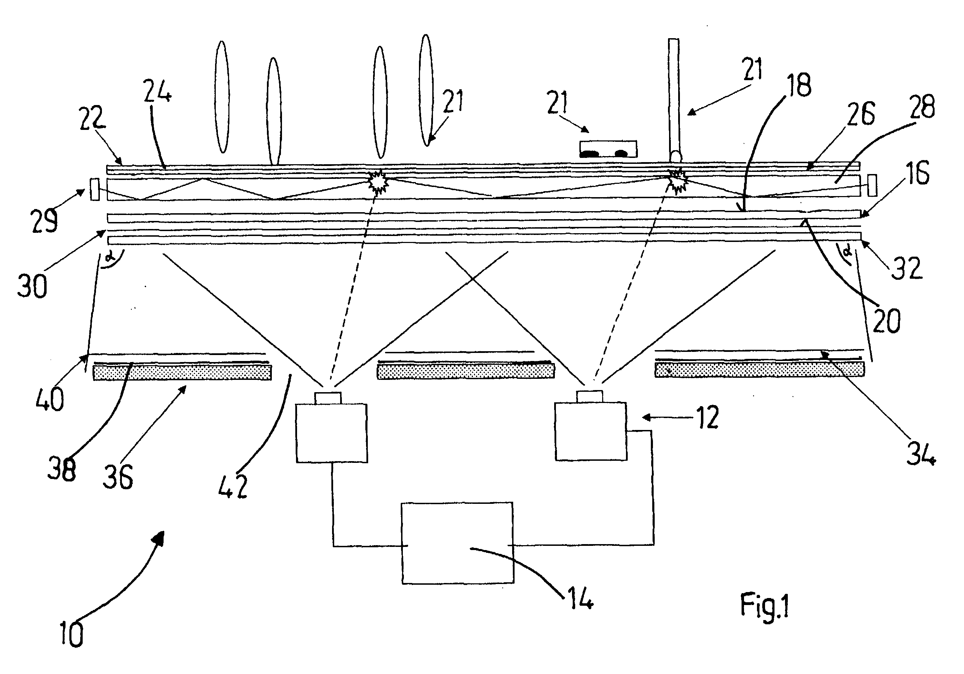

Fig. 1 zeigt eine Eingabevorrichtung 10 mit zwei entfernungssensitiven Kameras, vorliegend Time-of-flight- (TOF-) Kameras 12 und einer Auswerteeinrichtung 14 zur Auswertung von in die Eingabevorrichtung 10 eingegebenen Signalen.

Die Eingabevorrichtung 10 umfasst eine Bildschirmebene 16 mit einer einem Benutzer zugewandten Vorderseite 18 und einer dem Benutzer abgewandten Rückseite 20. Der Benutzer kann durch Einnehmen bestimmter Positionen an der Vorderseite 18 der Bildschirmebene 16, wie mit einem Objekt 21, beispielsweise einem Finger, Signale erzeugen, die als eine bildhafte Darstellungen in Form von Blobs verarbeitet und gegebenenfalls auf der Bildschirmebene 16 angezeigt werden.

Auf der dem Benutzer abgewandten Rückseite 20 der Bildschirmebene 16 sind die TOF-Kameras 12 angeordnet, die mit Weitwinkelobjektiven und in den Objektiven angeordneten Infrarot- (IR-) Sperrfiltern ausgestattet sind. Die TOF-Kameras 12 strahlen IR-Licht mit einem Wellenbereich von 850 nm +/- 10 nm in Richtung der Bildschirmebene 16 aus. Sie bestrahlen und durchstrahlen diese vollflächig. Die TOF-Kameras 12 umfassen ferner Sensoren, die von dem Objekt 21 reflektiertes Infrarotlicht in dem genannten Wellenbereich detektieren und eine Zeitspanne messen, die das ausgestrahlte IR-Licht benötigt, um an dem Objekt 21 reflektiert und wieder zurückgeworfen zu werden. Anhand der Zeitspanne wird der Abstand zwischen der TOF-Kamera 12 und dem Objekt 21 ermittelt.

Die Blobs entstehen dabei insbesondere dadurch, dass der Benutzer seinen Finger oder ein anderes Objekt 21 gegen die Bildschirmebene 16 bewegt und hierdurch an dieser bereichsweise eine veränderte Lichtsituation erzeugt. Insbesondere ändert sich durch ein derartiges Heranbewegen von Fingern, einer Hand oder einem andersartigen Objekt 21 an der Bildschirmebene 16 die Lichtsituation auch im Hinblick auf das von der Bildschirmebene 16 remittierte Infrarotlicht.

An die TOF-Kameras 12 ist eine Rechneranlage mit der Auswerteeinrichtung 14 angeschlossen. Die Auswerteeinrichtung 14 ist dazu eingerichtet, die Blobs bzw. Koordinaten der die Blobs erzeugenden Objekte bezogen auf die Bildschirmebene 16 zu erkennen und auszuwerten. Dies erfolgt anhand der veränderten Lichtsituation, die von den TOF-Kameras 12 aufgenommenen werden und durch entsprechende Filter- und Subtraktionsmethoden ermittelt werden.

Aus den von der Auswerteeinrichtung 14 erkannten Blobs werden Signale erzeugt und an die Rechneranlage weitergegeben, die dann Steuerfunktionen auslösen kann. So kann beispielsweise anhand der Blobs eine Bewegung von auf der Bildschirmebene dargestellten Elementen ausgelöst werden. Alternativ oder zusätzlich kann der Benutzer durch Erzeugung von Blobs eine Auswahl an Elementen oder Funktionen vornehmen, Werte eingeben, eine simulierte Tastatur bedienen oder eine simulierte Spielekonsole bedienen.

Die Bildschirmebene 16 ist vorliegend als ein LCD-Bildschirm mit Flüssigkristallen gebildet. Um eine besonders gute Qualität und Wiederholbarkeit der Blob-Erkennung zu gewährleisten, umfasst die Flüssigkristall-Bildschirmebene 16 an der dem Benutzer zugewandten Vorderseite 18 eine Haptikschicht 22. Diese Haptikschicht 22 umfasst eine äußere, dem Benutzer zugewandte Folienschicht 24 und eine vom Benutzer aus betrachtet dahinter ausgebildete elastische Klebeschicht 26 mit einer Dicke von 1 mm. Objekte können so bereits bei leichtester Berührung der Bildschirmebene 16 in die wegen der elastischen Klebeschicht 26 nachgiebige Haptikschicht 22 einsinken und eine IR-Licht-Streuung verursachen, die von den TOF-Kameras 12 aufgenommen wird.

Zwischen der Haptikschicht 22 und der Flüssigkristall-Bildschirmebene 16 ist eine Acrylplatte 28 angeordnet, die eine Dicke von 8 mm aufweist und mit der Klebeschicht 26 der Haptikschicht 22 vollflächig verklebt ist. An seitlichen Rändern der Acrylplatte 28 sind IR-Lichtquellen 29 angeordnet, die IR-Licht in die Acrylplatte 28 einstrahlen. Dieses IR-Licht wird zu einem Teil an den Seitenrändern der Acrylplatte 28 reflektiert und zu einem anderen Teil an farblosen, lichtstreuenden Partikeln in der Acrylplatte 28 derart abgelenkt, dass das Licht gleichmäßig gestreut aus der Bildschirmebene 16 in Richtung des Benutzers bzw. des Objekts 21 austritt. Objekte, die sich vor der Bildschirmebene 16 befinden oder in die Bildschirmebene 16 bzw. in die Haptikschicht 22 hineingedrückt werden, verursachen eine IR-Lichtstreuung bzw. Reflexion, die von den TOF-Kameras 12 erkannt wird.

Zwischen den TOF-Kameras 12 und der Bildschirmebene 16 sind weiterhin, von der Bildschirmebene aus betrachtet, ein erster Diffusor 30, eine transparente Platte 32 aus Acryl oder Glas, ein zweiter Diffusor 34 sowie eine Beleuchtungseinrichtung 36, die sichtbares Licht ausstrahlt, angeordnet. Zwischen dem zweiten Diffusor 34 und der Beleuchtungsvorrichtung 36 ist ferner eine Aufhellfolie 38 angeordnet. Seitlich der Bildschirmebene 16 sind Spiegel 40 mit einer Erstreckung zwischen der Bildschirmebene 16 und dem zweitem Diffusor 34 vorgesehen, die mit der Bildschirmebene 16 einen Winkel α von 90,5° bis 95° bilden.

Die TOF-Kameras 12 senden IR-Licht durch Durchgangsöffnungen 42 in der Beleuchtungsvorrichtung 36 und dem zweiten Diffusor 34 zur Bildschirmebene 16. Das IR-Licht strahlt durch die transparente Platte 32 und den ersten Diffusor 30 hindurch. Während das IR-Licht durch den ersten Diffusor 30 strahlt, wird das Licht leicht gestreut. Die transparente Platte 32 drückt den ersten Diffusor 30 gegen die Flüssigkristall-Bildschirmebene 16 und stützt diese ab.

Die Beleuchtungsvorrichtung 36 bestrahlt die Flüssigkristall-Bildschirmebene 16 mit sichtbarem Licht, so dass auf der Bildschirmebene 16 Pixel bzw. Bildpunkte gut erkennbar werden. Zwischen der Beleuchtungsvorrichtung 36 und der transparenten Platte 32 sind die Aufhellfolie 38 zur Intensivierung der Lichtstärke und der zweite Diffusor 34 angeordnet, der das von der Beleuchtungsvorrichtung 36 ausgestrahlte Licht relativ stark und gleichmäßig streut.

Die von der Bildschirmebene 16 bis zum zweiten Diffusor 34 seitlich angeordneten Spiegel 40 reflektieren das Licht in Richtung der Bildschirmebene 16, so dass diese gleichmäßig ausgeleuchtet wird.

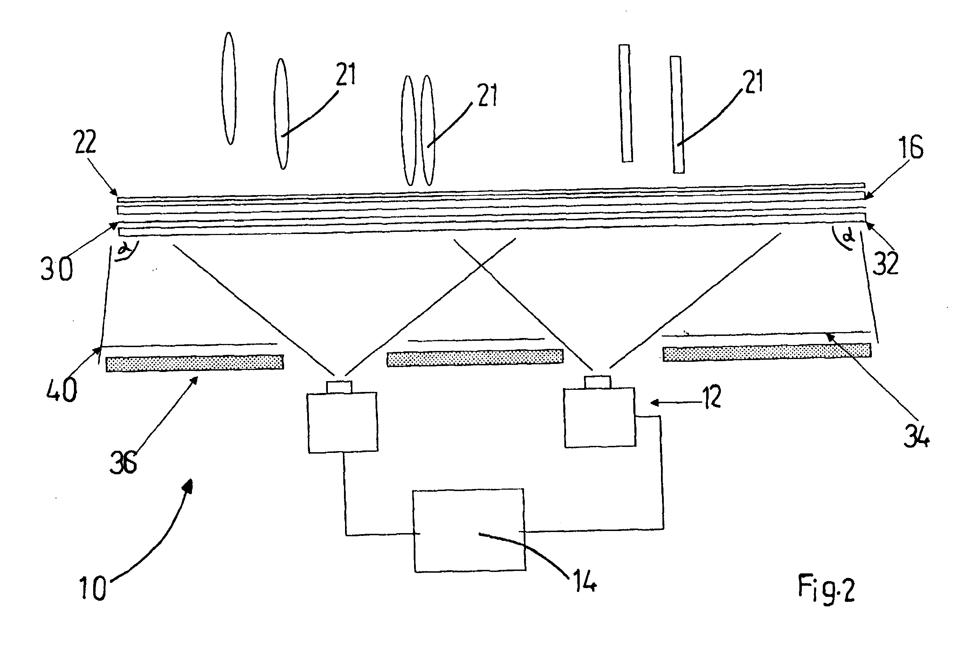

Fig. 2 zeigt eine weitere Ausführungsform einer erfindungsgemäßen Eingabevorrichtung 10. Die vorliegende Eingabevorrichtung 10 ist gemäß der unter Fig. 1 erläuterten Eingabevorrichtung 10 gestaltet, jedoch ohne Acrylplatte 28 und seitlich zu den Acrylplatten 28 angeordneten IR-Lichtquellen 29. Im vorliegenden Fall wird von den TOF-Kameras 12 hinreichend IR-Licht gegen die Bildschirmebene 16 gestrahlt, so dass von einer seitlichen Einstrahlung von IR-Licht abgesehen werden kann. Eine gute Blob-Erkennung wird bereits durch das durch die TOF-Kameras 12 zur Verfügung gestellte IR-Licht gewährleistet. Zusätzlich können jedoch auch (nicht dargestellte) IR-Lichtquellen IR-Licht seitlich in die Bildschirmebene 16 einstrahlen. Des Weiteren ist anstelle von TOF-Kameras 12 auch der Einsatz von anders gearteten 3D-Informationen liefernden Kameras möglich.

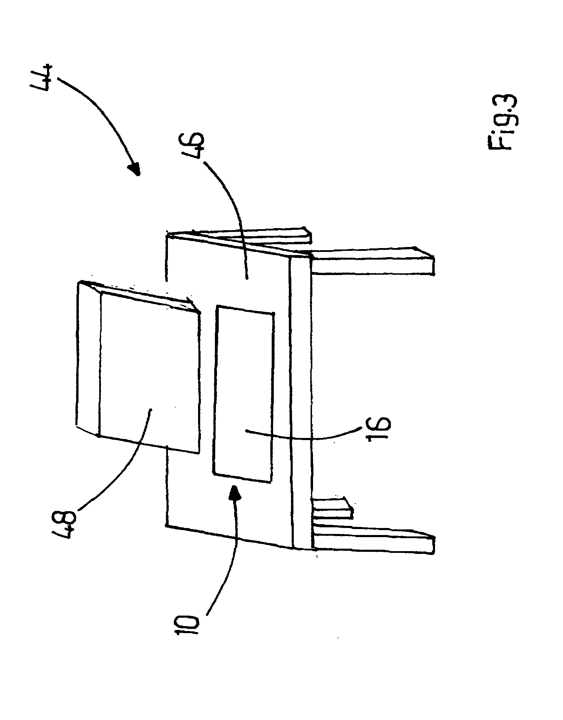

Fig. 3 zeigt eine Tischvorrichtung 44 mit einer Tischfläche 46 und einer Eingabevorrichtung 10. Die Eingabevorrichtung 10 ist gemäß einer der unter Fig. 1 bzw. Fig. 2 erörterten Eingabevorrichtungen 10 ausgebildet.

Die Bildschirmebene 16 der Eingabevorrichtung 10 ist vorliegend als eine Berührungsfläche 16, wie beispielsweise eine Mutitouch-Bildschirmebene, ausgebildet. Die Berührungsfläche 16 ist in der Tischfläche 46 integriert und bildet mit dieser eine Ebene. Die (nicht dargestellte) TOF-Kamera ist vom Benutzer aus betrachtet nicht sichtbar hinter der Berührungsfläche 16 angeordnet. Die Anzeigevorrichtung 48, wie ein LCD-Bildschirm, ist senkrecht zu der Tischebene 46 bzw. senkrecht zu der Berührungsfläche 16 ausgerichtet. Dabei können an der Berührungsfläche 16 und/oder der Anzeigevorrichtung 48 auch weitere Erkennungstechniken, wie insbesondere eine kapazitive Erkennung erfolgen. Wichtig ist insbesondere das Erkennen von einer Annährung eines Objektes, insbesondere eines Fingers, zu der Berührungsfläche 16 bzw. Anzeigevorrichtung 48 hin und/oder von dieser weg.

Bei Benutzung der Eingabevorrichtung 10 detektiert die entfernungssensitive Kamera mittels IR-Strahlung die genaue Position bzw. Positionsänderung eines Objekts relativ zu der Berührungsfläche 16 gemäß dem oben dargestellten Verfahren. Das Objekt kann sich hierbei in 2- oder 3-dimensionaler Ebene zu der Berührungsfläche 16 bewegen; das heißt, dass die Bedienung der Eingabevorrichtung 10 im Wesentlichen über Berührung oder Gestenerkennung erfolgen kann. Die (nicht dargestellte) Auswerteeinrichtung erzeugt aus den detektierten Positionen bzw. Positionsänderungen der Objekte Signale. Diese Signale und die die Signale auslösende Objekte werden mittels der Anzeigevorrichtung 48 visualisiert.

Da die Berührungsebene 16 senkrecht zu der Anzeigeeinrichtung 48 ausgerichtet ist, kann der Benutzer beim Bedienen der Eingabevorrichtung 10 eine ergonomisch günstige Position einnehmen.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Eingabevorrichtung
- 12: TOF-Kamera
- 14: Auswerteeinrichtung
- 16: Bildschirmebene
- 18: Vorderseite
- 20: Rückseite
- 21: Objekt
- 22: Haptikschicht
- 24: Folienschicht
- 26: Klebeschicht
- 28: Acrylplatte
- 29: IR-Lichtquellen
- 30: erster Diffusor
- 32: transparente Platte
- 34: zweiter Diffusor
- 36: Beleuchtungsvorrichtung
- 38: Aufhellfolie
- 40: Spiegel
- 42: Durchgangsöffnungen
- 44: Tischvorrichtung
- 46: Tischfläche
- 48: Anzeigevorrichtung

## Patentansprüche

1. Eingabevorrichtung (10) mit einer Kamera (12), vor der ein Benutzer durch Einnehmen bestimmter Positionen Signale erzeugen kann, die von einer Auswerteeinrichtung (14) auswertbar sind, bei der die Kamera (12) als eine entfernungssensitive Kamera (12) gestaltet ist und bei der eine Berührungsfläche (16) vorgesehen ist, welche derart vor der entfernungssensitiven Kamera (12) angeordnet ist, dass der Benutzer die Positionen an der von der entfernungssensitiven Kamera (12) abgewandten Seite der Berührungsfläche (16) einzunehmen hat.

2. Eingabevorrichtung (10) nach Anspruch 1,
bei der die Berührungsfläche (16) als eine Bildschirmebene (16) gestaltet und eine Anzeigeeinrichtung zum Erzeugen einer bildhaften Darstellung an der Bildschirmebene (16) vorgesehen ist.

3. Eingabevorrichtung (10) nach Anspruch 2,
bei der die Bildschirmebene (16) als ein Flüssigkristall-Bildschirm (16) gestaltet ist.

4. Eingabevorrichtung (10), insbesondere nach Anspruch 3, mit einer Flüssigkristall-Bildschirmebene (16), an der ein Benutzer durch Berühren der Flüssigkristall-Bildschirmebene (16) als Signale Blobs erzeugen kann, die von einer Auswerteeinrichtung (14) auswertbar sind,
bei der die Flüssigkristall-Bildschirmebene (16) an ihrer dem Benutzer zugewandten Seite mit einer Haptikschicht (22) gestaltet ist, die aus einer äußeren Folienschicht (24) und einer vom Benutzer aus betrachtet dahinter ausgebildeten elastischen Schicht (26) gebildet ist.

5. Eingabevorrichtung (10) nach Anspruch 4,
bei der die elastische Schicht (26) eine Klebeschicht (26) mit einer Dicke von 0,2 bis 2 mm, insbesondere von 0,5 bis 1,5 mm, bevorzugt von 1 mm ist.

6. Eingabevorrichtung (10) nach Anspruch 4 oder 5,
bei der vom Benutzer aus betrachtet hinter der elastischen Schicht (26) eine Acrylplatte (28) oder eine Glasplatte (28) ausgebildet ist.

7. Eingabevorrichtung (10) nach einem der Ansprüche 3 bis 6,
bei der die Flüssigkristall-Bildschirmebene (16) als ein LCD-Panel oder ein OLED-Panel gestaltet ist.

8. Eingabevorrichtung (10) nach einem der Ansprüche 3 bis 7,
bei der vom Benutzer aus betrachtet hinter der Flüssigkristall-Bildschirmebene (16) ein erster Diffusor (30) angeordnet ist.

9. Eingabevorrichtung (10) nach einem der Ansprüche 3 bis 8,
bei der vom Benutzer aus betrachtet hinter dem ersten Diffusor (30) eine transparente Platte (32) angeordnet ist.

10. Eingabevorrichtung (10) nach einem der Ansprüche 3 bis 9,
bei der vom Benutzer aus betrachtet hinter der transparenten Platte (32) mindestens eine Beleuchtungsvorrichtung (36) angeordnet ist.

11. Eingabevorrichtung (10) nach einem der Ansprüche 3 bis 10,
bei der zwischen der transparenten Platte (32) und der mindestens einen Beleuchtungsvorrichtung (36) ein zweiter Diffusor (34) mit mindestens einer Durchgangsöffnung (42) angeordnet ist.

12. Eingabevorrichtung (10) nach einem der Ansprüche 3 bis 11,
bei der zwischen dem zweiten Diffusor (34) und der mindestens einen Beleuchtungsvorrichtung (36) mindestens eine Aufhellfolie (38) angeordnet ist.

13. Eingabevorrichtung (10) nach einem der vorhergehenden Ansprüche,
bei der vor der entfernungssensitiven Kamera (12) ein IR-Sperrfilter mit einem Wellenbereich von 850 nm bis 940 nm angeordnet ist.

14. Eingabevorrichtung (10) nach einem der vorhergehenden Ansprüche,
bei der die Bildschirmebene (16) mindestens einen Rand aufweist, an dem mindestens ein Spiegel (40) angeordnet ist, der im Wesentlichen senkrecht zur Bildschirmebene (16) ausgerichtet ist, und der sich vom Benutzer aus betrachtet hinter der Bildschirmebene (16) von dieser bis mindestens zum zweiten Diffusor (34) erstreckt.

15. Eingabevorrichtung (10) nach Anspruch 14,
bei der der mindestens eine Spiegel (40) zu der Bildschirmebene (16) in einem Winkel von 90,5° bis 95° ausgerichtet ist.

16. Verfahren zum Erkennen eines Objekts an einer Bildschirmebene (16) mit den Schritten:
- Eindrücken des Objekts in die Bildschirmebene (16),
- Zuordnen eines Blobs zum Objekt aufgrund eines durch das Eindrücken erzeugten Signals,
- Beibehalten der Zuordnung des Blobs zum Objekt während einer Bewegung des Objekts an der Bildschirmebene (16), ohne dass dieses dabei eingedrückt wird.

17. Verfahren zum Erkennen eines Objekts nach Anspruch 16 mit den Schritten:
- Erneutes Eindrücken des Objekts in die Bildschirmebene (16),
- Aufgeben der Zuordnung des Blobs zum Objekt durch das erneute Eindrücken des Objekts.

18. Tischvorrichtung (44) mit einer Tischfläche (46) und mindestens einer Eingabevorrichtung (10) nach einem der Ansprüche 1 bis 15,
bei der die Eingabevorrichtung (10) senkrecht zur Tischfläche (46) ausgerichtet ist oder in der Tischfläche (46) selbst integriert ist.

19. Tischvorrichtung (44) nach Anspruch 18,
bei der eine Anzeigevorrichtung (48) senkrecht zur Tischfläche (46) ausgerichtet ist.
